# EUROPÄISCHE PATENTANMELDUNG

(11) **EP 4 180 369 A1**
(43) Veröffentlichungstag der Anmeldung: **17.05.2023**
(21) Anmeldenummer: 22206390.1
(22) Anmeldetag: 09.11.2022
(51) Int. Cl.: B65G 47/91, B25J 9/16, B25J 15/06

(54) **PRÜF-VERFAHREN FÜR SAUGER-EINHEIT SOWIE SAUGER-EINHEIT ZUR DURCHFÜHRUNG DES VERFAHRENS**

(30) Priorität: 12.11.2021 DE 102021129545
(71) Anmelder: Gerhard Schubert GmbH, 74564 Crailsheim (DE)
(72) Erfinder: Haaf, Volker, 74568 Frankenhardt (DE)
(74) Vertreter: Weickmann & Weickmann PartmbB

(57) **Zusammenfassung**

Um möglichst zuverlässig ermitteln zu können, ob an einem aktivierten Sauger (22) wie gewünscht auch das Produkt (P) gehalten wird, wird hinsichtlich der Saugluft (S), die vom Sauger (22) abtransportiert wird, entweder die Strömungsmenge pro Zeiteinheit und/oder die Strömungsgeschwindigkeit und/oder ein alternativer Parameter, der einem der beiden genannten Parameter repräsentiert, ermittelt. Hierüber kann zuverlässiger als über die Messung eines absoluten Unterdruck-Wertes ein korrektes Anliegen des Saugers (22) an einem korrekten Produkt (P) ermittelt werden, insbesondere indem nicht ein Absolut-Wert eines der genannten Parameter ermittelt wird, sondern die Form der Kurve (PKH) dieses Parameters über der Zeit beim Ergreifen + Halten und/oder beim Halten + anschließenden Loslassen des Produktes (P) durch den Sauger (22), und diese Parameter-Kurve (PKH) daraufhin überprüft wird, ob sie in einem Toleranzbereich-Band (TP) liegt, welches ebenfalls sehr einfach und automatisch ermittelt werden kann.

## Beschreibung

### I. Anwendungsgebiet

Die Erfindung betrifft Produkt-Greifer in der Bauform als Unterdruck-Sauger, bei denen das Produkt mittels Saugluft, also mittels Unterdruck, am Sauger gehalten wird.

### II. Technischer Hintergrund

Derartige Unterdruck-Sauger - in der Verpackungstechnik meist als Picker bezeichnet - werden in Verpackungs-Maschinen in großer Zahl eingesetzt, da hierbei nicht wie bei einem mechanischen Greifer bei jedem Produktwechsel auch alle mechanischen Greifer gewechselt werden müssen, sondern ein und derselbe Sauger auch unterschiedliche Produkte, sofern sie etwa gleich groß und gleich schwer sind, ansaugen und halten kann.

Für die automatische Steuerung gerade einer Verpackungs-Maschine ist es dabei essenziell, dass die Steuerung zuverlässig weiß, ob an den einzelnen Saugern momentan ein Produkt gehalten wird oder nicht.

Zu diesem Zweck wird - bei aktiviertem Sauger, denn bei Nichtbedarf wird der Sauger mittels eines Sperrventils von der Unterdruck-Versorgung getrennt, um die Menge an verbrauchter Saugluft gering zu halten - bisher eine Messung des am Sauger anliegenden, absoluten Unterdruckes durchgeführt, vorzugsweise möglichst nahe am Sauger, jedenfalls zwischen Sauger und Sperrventil.

Dies lässt jedoch keinen sicheren Rückschluss auf Vorhandensein oder Fehlen eines Produktes zu, da ein dort anliegender zu geringer Unterdruck auch auf Ursachen stromabwärts von der Messstelle zurückzuführen sein kann.

Ferner möchte man nahe am Sauger, also in einem sowohl mechanisch als auch teilweise hygienisch kritischen Bereich, die Anordnung von Sensoren und anderen empfindlichen und schlecht zu reinigenden Bauteilen vermeiden.

### III. Darstellung der Erfindung

### a) Technische Aufgabe

Es ist daher die Aufgabe gemäß der Erfindung, ein Prüf-Verfahren für die Sauger-Einheit zur Verfügung zu stellen, sowie eine hierfür geeignete Sauger-Einheit, die die genannten Nachteile vermeidet.

### b) Lösung der Aufgabe

Diese Aufgabe wird durch die Merkmale der Ansprüche 1 und 15 gelöst. Vorteilhafte Ausführungsformen ergeben sich aus den Unteransprüchen.

Der erste Grundgedanke der Erfindung besteht darin, dass durch Betrachten der Strömungsmenge (Masse oder Volumen) pro Zeiteinheit und/oder Strömungsgeschwindigkeit der vom Sauger abgeführten Saugluft zuverlässiger als durch Messen des absoluten Unterdruckes ein nicht korrekt am Sauger gehaltenes oder dort sogar vollständig fehlendes oder defektes Produkt detektierbar ist.

Der zweite Grundgedanke der Erfindung besteht darin, dass nach Beaufschlagen des Saugers mit Saugluft für das Ergreifen und anschließende Halten des Produktes daran bei jeder Art, also jeder Charge, von zu handhabenden Produkten sich eine typische Verlaufskurve der Strömungsmenge pro Zeiteinheit und/oder der Strömungsgeschwindigkeit an Saugluft über der Zeit einstellt, die allein schon durch qualitative Überprüfung ein korrektes Halten eines Produktes erkennen lässt ohne dass unbedingt absolute Werte, sei es eines Druckes oder der Strömungsmenge oder der Strömungsgeschwindigkeit, benötigt werden.

A1:
Hinsichtlich des Verfahrens wird die bestehende Aufgabe dadurch gelöst, dass bei einem mittels Saugluft mit Unterdruck beaufschlagbaren Sauger Parameter-Kurven für den Zeitbereich Ergreifen + Halten ermittelt werden können. Der Parameter kann entweder direkt die Strömungsmenge pro Zeiteinheit der Saugluft und/oder die Strömungsgeschwindigkeit der Saugluft sein und/oder einen Alternativ-Parameter, der diese Strömungsmenge oder diese Strömungsgeschwindigkeit repräsentiert.

A3:
Der Sauger wird in aller Regel nicht permanent mit Saugluft beaufschlagt, sondern zur Einsparung von Saugluft vor oder bei dem Ergreifen erst mit der Unterdruckquelle verbunden und für das Loslassen diese Verbindung wieder unterbrochen. Dies erfolgt meist mittels eines Sperrventils, und die Ermittlung der Strömungsmenge oder Strömungsgeschwindigkeit erfolgt stromaufwärts oder stromabwärts des Sperrventils oder im Sperrventil.

Nach Ermittlung einer solchen Parameter-Kurve beim Ergreifen des, vorzugsweise jedes, Produktes kann diese mit einer - vorzugsweise nur für diesen einen Sauger gültigen - bandförmigen Kurve, dem Toleranzbereich-Band, verglichen werden auf die Art und Weise, dass bei einem korrekten Vorgang (Ergreifen + Halten) die Parameter-Kurve innerhalb des Toleranzbereich-Bandes unterbringbar sein sollte. Wenn nicht, wird ein Warnsignal erzeugt oder eine Warnreaktion veranlasst, vorzugsweise von der Steuerung der Maschine.

A2:
Ist die Parameter-Kurve nicht innerhalb des Toleranzbereich-Bandes unterbringbar, so wird davon ausgegangen, dass
- entweder kein Produkt am Sauger gehalten wird,
- oder ein beschädigtes Produkt am Sauger gehalten wird
- oder unbeschädigtes Produkt an einem beschädigten Sauger, mit insbesondere einer beschädigten Sauger-Lippe, gehalten wird.

Die Art der Warnreaktion wird basierend auf dieser Annahme gewählt, wobei eher davon ausgegangen wird, dass kein oder ein beschädigtes Produkt an einem intakten Sauger gehalten wird und dementsprechend das eventuell noch vorhandene beschädigtes Produkt vom Sauger zu einer Ausschuss-Position gebracht und losgelassen wird.

Liegt - nur bei einem einzelnen Sauger - die Situation mehrfach, mindestens zweimal, unmittelbar hintereinander vor, wird dagegen von einem beschädigten Sauger ausgegangen und eine entsprechende Warnreaktion, insbesondere ein Warnsignal, abgegeben.

Die Parameter-Kurve wird vorzugsweise nicht anhand ihrer Absolut-Werte mit dem Toleranzbereich-Band verglichen, sondern beide so übereinandergelegt, dass nach Möglichkeit die Parameter-Kurve sich innerhalb des Toleranzbereich-Bandes befindet, sofern dies möglich ist, was natürlich alles virtuell und elektronisch von der Steuerung vollzogen wird. Vorzugsweise wird hierfür die zu prüfende Parameter-Kurve mit ihrer horizontalen Haltelinie - die später erläutert wird - in den Haltelinie-Bereich des Toleranzbereich-Bandes gelegt.

Auf diese Art und Weise sind Absolut-Wert der Parameter der entsprechenden Parameter-Kurven oder des daraus erzeugten Toleranzbereich-Bandes nicht unbedingt notwendig und somit auch keine Kalibrierung des Saugers und dessen Sensorik.

Das Ermitteln der Strömungsmenge pro Zeiteinheit und/oder der Strömungsgeschwindigkeit erfolgt wahlweise stromaufwärts, stromabwärts oder in dem dem Sauger zugeordneten Sperrventil für die Saugluft, denn diese Vorgehensweise ist im Wesentlichen nur durchführbar, wenn stromabwärts jedes einzelnen Sperrventils diese Parameter ermittelt werden, bevor die Saugluft-Leitung der einzelnen Sauger stromabwärts zu einer größeren Saugluft-Leitung vereinigt wird.

A5:
Als Beginn des Zeitbereichs "Ergreifen + halten" wird meist der Aktivierungs-Zeitpunkt mit Unterdruck festgelegt, also der Zeitpunkt der Verbindung des Saugers mit der Unterdruck-Quelle.

Als Dauer dieses Zeitbereichs wird entweder eine vorgegebene Zeitdauer verwendet oder diejenige Dauer, die vom Aktivierungs-Zeitpunkt vergeht, bis die Parameter-Kurve, die einen Einschwing-Bereich aufweist, dort eine Schwingungshöhe aufweist, die geringer ist als 15 %, insbesondere geringer als 10 %, insbesondere geringer als 5 % der Höhenlage, also des Wertes, der sich theoretisch einstellenden Haltelinie.

A4:
Das Toleranzbereich-Band kann sehr einfach, vorzugsweise automatisch von der Steuerung, festgelegt werden:
Zu diesem Zweck werden vor Beginn der Durchführung des Arbeitsauftrages von Produkten vorzugsweise unter Aufsicht des Bedieners einige Handhabungsvorgänge, die später überwacht werden sollen, also Ergreifen + Halten und/oder Halten + Loslassen, mit Produkten aus der betreffenden Charge durchgeführt, insbesondere unter manueller Überwachung eines korrekten Ergreifens durch den Bediener, die unbeschädigt sind und hinsichtlich der Parameter, die das Produkt kennzeichnen, im Sollbereich liegen.

Diese Test-Parameter-Kurven werden - virtuell, also in elektronischer Form von der Steuerung - übereinandergelegt und aus deren relativen Abweichungen voneinander, also deren Abständen zueinander, der Spreizung, das Toleranzbereich-Band ermittelt.

Dies kann beispielsweise dadurch geschehen, dass die am weitesten - hinsichtlich des überwachten Parameters - auseinanderliegenden Test-Parameter-Kurven, als oberer und unterer Rand des Toleranzbereich-Bandes verwendet wird, oder indem ein sämtliche Test-Parameter-Kurven einhüllendes, insbesondere möglichst eng einhüllendes, Toleranzbereich-Band festgelegt wird.

Hierfür werden die Test-Parameter-Kurven vorzugsweise mit ihren horizontal verlaufenden Nulllinien übereinandergelegt.

A6:
Wenn dabei - also sowohl bei den Test-Parameter-Kurven oder im späteren Betrieb bei den regulären Parameter-Kurven - diese Test-Parameter-Kurven Ausreißer nach oben oder unten aufweisen, werden diese Ausreißer zumindest nicht vollständig berücksichtigt:
Als Ausreißer wird beispielsweise eingestuft, wenn bei einer Kurve zwischen den Flanken eines Maximas und/oder eines Minimas der Zwischenwinkel zwischen den Flanken weniger als 15° beträgt, insbesondere weniger als 10° beträgt, insbesondere weniger als 7° beträgt, insbesondere weniger als 5° beträgt, also das entsprechende Maximum oder Minimum sehr spitz ausgebildet ist.

Oder wenn einzelne Spitzen oder Täler, die deutlich über die der übrigen Kurven hinausgehen, also um mehr als 50 %, oder gar mehr als 100 %, dieser Ausreißer-Punkt entlang der Kurve oder die gesamte Kurve nicht verwendet wird. Wenn nur der Ausreißer-Wert innerhalb der Kurve nicht verwendet wird, wird dieser entweder vollständig ignoriert oder durch einen Durchschnittswert der übrigen Kurven an dieser Stelle ersetzt.

Sowohl im Zeitbereich Ergreifen + Halten als auch im Zeitbereich Halten + Loslassen weisen die Parameter-Kurven typische Kurvenbereiche auf und dementsprechend das Toleranzbereich-Band typische Bandbereiche, die ebenso wie die Rückschlüsse, die daraus gezogen werden können, anhand der Figuren erläutert werden.

A13:
Ein Alternativ-Parameter zu Strömungsmenge oder Strömungsgeschwindigkeit der Saugluft ist eine Druck-Differenz über einem Hindernis, also irgendeiner Art von Drosselstelle, beispielsweise das Sperrventil, im Strömungspfad der Saugluft stromabwärts des Saugers.

Dabei kann auch das Sperrventil selbst als Hindernis betrachtet werden, selbst im geöffneten Zustand, und die Druck-Differenz über dem Sperrventil ermittelt werden, sodass also vorzugsweise der Druck stromaufwärts und stromabwärts des Hindernisses, insbesondere des Sperrventils, ermittelt und daraus die Druckdifferenz gebildet wird. Vorzugsweise sollten die Messstellen dabei unmittelbar stromaufwärts und/oder unmittelbar stromabwärts des Hindernisses, insbesondere Sperrventils, gewählt werden, damit sich wenig andere Einflüsse im Strömungspfad zwischen den beiden Messstellen auswirken können.

Um dabei unabhängig von der Parameter-Kurve zu wissen, ob sich das Sperrventil tatsächlich in seiner geöffneten Endlage befindet, sollte vorzugsweise zumindest die geöffnete Endlage des Sperrventils detektiert werden, vorzugsweise auch dessen geschlossene Endlage, da letztere auch für die Höhenlage der Null-Linie in der Parameter-Kurve ausschlaggebend ist, obwohl deren Absolut-Wert nicht ermittelt wird.

Gemäß der Bernoulli-Gleichung sind an zwei beabstandeten Stellen eines Strömungspfades nicht nur die Produkte aus Querschnittsfläche des Strömungspfades und der Strömungsgeschwindigkeit gleich, sondern auch - über einem Hindernis im Strömungspfad - eine definierte Druckdifferenz vorliegt, die bei einem bestimmten angesaugt gehaltenen Produkt einen charakteristischen Wert besitzt und auch kennzeichnend ist für den dazwischen vorliegenden Mengendurchsatz und/oder Strömungsgeschwindigkeit der Saugluft.

Selbst das geöffnete Sperrventil mit seinen Einlauf- und Auslaufkanten, den Übergängen zwischen Ventilsitz und Ventilkörper und ähnlichem stellt ein solches Hindernis dar, das genügt, um eine solche Druckdifferenz zu bewirken. Dabei ist diese Druckdifferenz relativ unabhängig von dem Absolut-Wert des Unterdruckes, der stromabwärts dieses Hindernisses anliegt, was die Überwachung einer größeren Anzahl von, von der gleichen Unterdruck-Quelle aus versorgten, Saugern sehr erleichtert und vor allem auch keine Kalibrierung der Drucksensoren auf den Absolut-Wert erfordert.

Der Differenzdruck über ein Hindernis im Strömungspfad, vorzugsweise das Sperrventil, hinweg wird üblicherweise ermittelt, indem der Druck stromaufwärts und stromabwärts dieses Hindernisses ermittelt und daraus der Differenzdruck gebildet wird. Vorzugsweise wird der Druck unmittelbar stromaufwärts und stromabwärts dieses Hindernisses ermittelt, um weitere Effekte auszuschließen - wobei bei Ermittlung über das Sperrventil die Drucksensoren direkt im Grundkörper des Sperrventils, also dem Ventilsitz, angeordnet sein können - und dieser Differenzwert mit einem Differenz-Referenzwert verglichen.

Bei gegenüber dem Differenz-Referenzwert zu hohem Differenzwert wird auf ein fehlendes Produkt am Sauger geschlossen, und von der Steuerung beispielsweise ein entsprechendes Warnsignal abgegeben und/oder die Verbindung dieses Saugers zur Unterdruckquelle durch Betätigen des Sperrventils in die gesperrte Stellung geschlossen, bis dort wieder Unterdruck benötigt wird.

Auch hier sollte der Differenz-Referenzwert vorzugsweise in der Praxis ermittelt werden und an dem gleichen Sauger und mittels eines echten, unbeschädigten Produktes oder mehrerer echter Produkte aus der zu handhabenden Charge hintereinander, um einen guten Durchschnittswert zu erhalten.

A11:
Im Zeitbereich "Halten + Loslassen" ergeben sich ebenfalls typische Kurvenverläufe, aber nicht für die an der Messstelle strömende Menge Ansaugluft oder deren Geschwindigkeit, denn ab dem der Deaktivierungs-Zeitpunkt, also dem Zeitpunkt der Unterbrechung der Verbindung zwischen Sauger und UnterdruckQuelle, findet ja keine Durchströmung der Saugluft-Leitung mehr statt.

Dennoch wird das Produkt nicht sofort zum Deaktivierungs-Zeitpunkt vom Sauger abfallen, sondern erst wenn der Unterdruck im Sauger und der Rohrleitung bis zum Sperrventil soweit angestiegen ist, dass die bewirkte Haltekraft nicht mehr zum Halten des Produktes ausreicht.

Deshalb wird das korrekte Loslassen des Produktes im Zeitbereich "Halten + Loslassen" anhand des Druck-Verlaufes stromaufwärts des Sperrventils, also zwischen Sauger und Sperrventil, überwacht.

In diesem Zeitbereich wird die bei jedem Vorgang des Loslassens eine aufgezeichnete Druck-Kurve qualitativ wiederum verglichen mit einem Toleranzbereich-Band des Druckes.

Auch hier wird eine Warnreaktion, insbesondere ein Warnsignal, erzeugt, wenn die Druck-Kurve nicht innerhalb des Toleranzbereich-Bandes des Druckes untergebracht werden kann.

Die Ermittlung des Toleranzbereich-Bandes erfolgt analog zum Zeitbereich "Ergreifen und Halten" aus einer Anzahl von Test-Druck-Kurven, die mit unversehrten Produkten der entsprechenden Charge aufgezeichnet wurden.

Als Beginn des Zeitbereichs "Halten + Loslassen" wird in aller Regel der Deaktivierung-Zeitpunkt der Unterdruckversorgung oder ein Zeitpunkt wenige Sekunden oder Sekundenbruchteile davor festgelegt.

Als Dauer dieses Zeitbereiches wird entweder eine vorgegebene Zeitdauer festgelegt oder diejenige Dauer, die vom Deaktivierung-Zeitpunkt vergeht, bis sich der Wert der Druck-Kurve auf eine Differenz von weniger als 10 %, insbesondere von weniger als 7 %, insbesondere von weniger als 5 % an den Umgebungsdruck angenähert hat.

Da bei einem zu haltenden Produkt in der Regel das Sperrventil in der Saugluft-Zuführung vollständig geöffnet sein soll, ist es sinnvoll, die Ventilstellung zumindest hinsichtlich der vollständig geöffneten Endlage zu überwachen, um sicherzustellen, dass ein fehlerhafter Differenz-Referenzwert seine Ursache nicht in einem nur unvollständig geöffneten Sperrventil hat. Vorzugsweise werden beide Endlagen des Ventils überwacht.

A14:
der Kontakt-Zeitpunkt, zu dem ein Sauger im Kontakt mit dem Produkt gerät unmittelbar vor dessen Ergreifen, kann im Übrigen nicht aus Parametern in der Unterdruck-Leitung ermittelt werden, sondern dieser physische Kontakt kann entweder mittels Kamera festgestellt werden oder mittels des Vergleichs der Positionen des Saugers einerseits und des zu kontaktieren Produktes andererseits, die in der Regel beide der Steuerung jeweils bekannt sind.

A15:
Hinsichtlich der **Sauger-Einheit,** die typischerweise umfasst
- einen Grundkörper,
- einen Sauger zum Halten eines Produktes mittels Saugluft mit Unterdruck am Sauger,
- einen Unterdruck-Anschluss am Grundkörper zum Verbinden des Saugers mittels einer Unterdruck-Leitung mit einer Unterdruck-Quelle,
- je ein, jedem Sauger stromabwärtig zugeordneten, ansteuerbaren Sperrventil in der Unterdruck-Leitung,
- wenigstens einen Drucksensor, insbesondere pro Sauger,
- eine Steuerung, die mit dem Drucksensor datentechnisch verbunden ist und mit dem Sperrventil wirkverbunden ist,
wird die bestehende Aufgabe dadurch gelöst, dass
- entweder ein Durchflussmengen-Sensor, also ein Durchflussmassen-Sensor oder ein Durchflussvolumen-Sensor, oder ein Durchflussgeschwindigkeits-Sensor bezüglich der Saugluft in der Unterdruck-Leitung vorhanden ist
- oder ein zum ersten vorhandenen Drucksensor zusätzlicher Drucksensor so angeordnet ist, dass je ein Drucksensor stromaufwärts und stromabwärts des Sperrventils angeordnet ist.

Die Steuerung ist dabei so ausgebildet, dass sie zur Durchführung des oben beschriebenen Verfahrens in der Lage ist.

Wenn weiterhin das Sperrventil einen Ventilstellungs-Sensor aufweist, kann eine nicht korrekte Ventilstellung als Ursache eines auffälligen Druckdifferenz-Wertes zuverlässig ausgeschlossen werden.

### c) Ausführungsbeispiele

Ausführungsformen gemäß der Erfindung sind im Folgenden beispielhaft näher beschrieben. Es zeigen:
- **Figur 1a:**: eine typische Pickerstraße in der Aufsicht von oben,
- **Figur 1b:**: die Pickerstraße der **Figur 1a** in der Seitenansicht,
- **Figur 1c:**: einen Mehrfach-Saugkopf in der Seitenansicht,
- **Figur 2:**: das Saugluft-Schaltbild einer Pickerstraße oder eines Mehrfach-Saugkopf,
- **Figur 3a1, 2:**: Test-Parameter-Kurven sowie Toleranzbereich-Band im Zeitbereich Ergreifen + Halten in verschiedenen Versionen,
- **Figur 3b:**: Parameter-Kurven sowie Toleranzbereich-Band im Zeitbereich Ergreifen + Halten,
- **Figur 4a:**: Test-Parameter-Kurven sowie Toleranzbereich-Band im Zeitbereich Halten + Loslassen
- **Figur 4b:**: Parameter-Kurven sowie Toleranzbereich-Band im Zeitbereich Halten + Loslassen

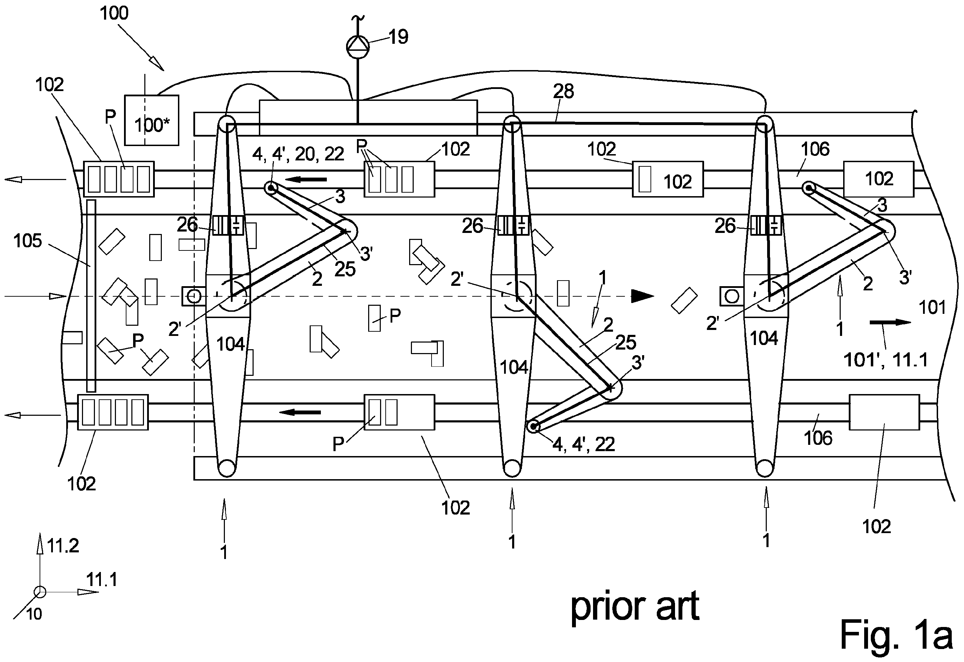

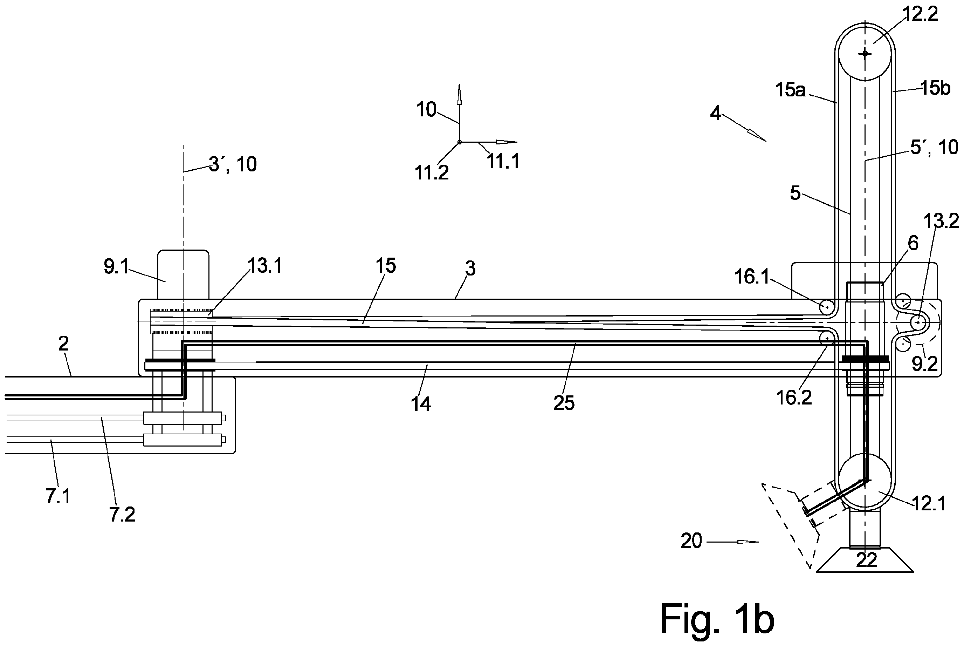

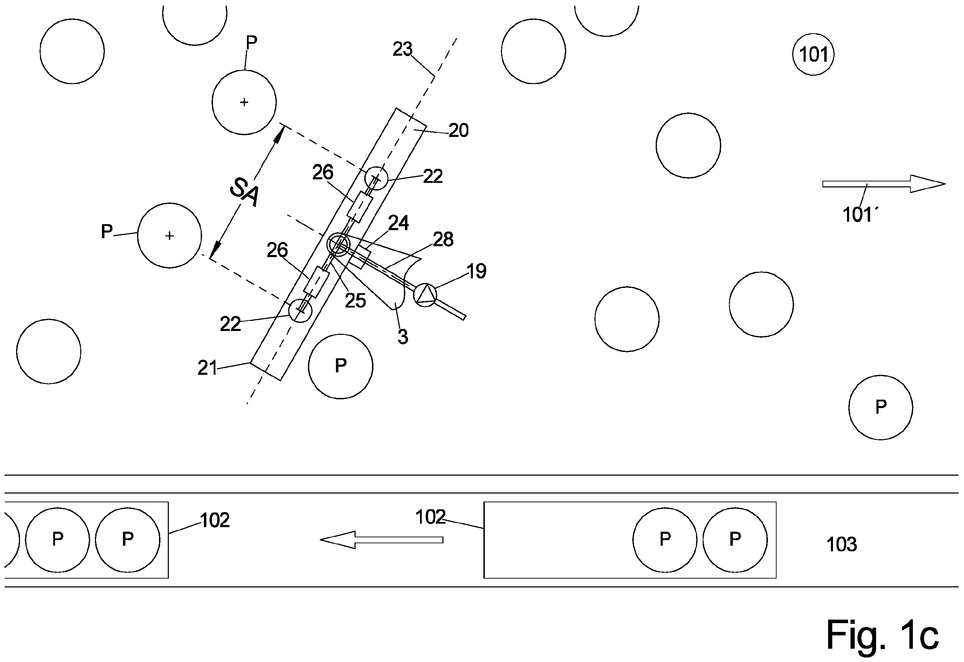

**Figur 1** zeigt eine bekannte Roboterstraße 100 als Umsetz-Vorrichtung, mittels der Produkte P, die ungeordnet auf einer Aufnahmefläche 101 - hier in Form eines in Produkt-Richtung 101' laufenden Produkt-Bandes 101 - angeliefert werden und von einem der mehreren in dieser Durchlaufrichtung 101' hintereinander angeordneten Robotern 1 ergriffen und auf einer Ablagefläche 103 - in diesem Fall dem Boden von Behältern 102 - abgelegt werden.

Zu diesem Zweck wird am Eingang vor dem Umsetz-Bereich, also vor dem ersten in Durchlaufrichtung 101' vorhanden Roboter 1, mittels eines Scanners 105 die Position und gegebenenfalls auch Drehlage der Produkte P auf dem Produktband 101 ermittelt und an die Steuerung 100* der Roboterstraße 100 weitergegeben, die auch mit den Antrieben aller anderen beweglichen Komponenten verbunden ist und beispielsweise die Geschwindigkeit des Produktbandes 101 in Durchlaufrichtung 101' kennt, so dass jederzeit die absoluten Produkt-Positionen der Produkte P auf dem Produktband 101 bekannt sind gegebenenfalls einschließlich ihrer Drehlage.

Die Behälter 102 stehen auf einem von in diesem Fall zwei Behälter-Bändern 106, welche in diesem Fall entgegen der Durchlaufrichtung 101' jeweils seitlich neben dem Produktband 101 in Behälter-Richtung 106' laufen.

Von den Robotern 1 sind jeweils die oberhalb des Produktbandes 101 in der horizontalen Querrichtung zur Durchlaufrichtung 101' verlaufenden, meist aufgeständerten, Quertraversen 104 erkennbar, die als Roboter-Basis 104 dienen und an denen jeweils ein - in diesem Fall serieller - Roboterarm befestigt ist.

Dessen Oberarm 2 ist gegenüber der Roboterbasis 104 um eine sich in der Vertikalen 10 erstreckende Oberarm-Achse 2' in der horizontalen Ebene verschwenkbar, und ebenso ein Unterarm 3, der schwenkbar um eine aufrechte, insbesondere vertikale, Unterarm-Achse 3' am freien Ende des Oberarmes 2 befestigt ist.

Am freien Ende des Unterarmes 3 ist eine Hub-Einheit 4 angebracht, die die Vertikalbewegung eines an ihr befestigten Greifkopfes 20 bewirkt, der mindestens einen Greifer 22 in Form eines Saugers 22 aufweist.

Die **Figur 1b** zeigt in der Seitenansicht an einem nur schematisch dargestellten Roboterarm mit Oberarm 2 und Unterarm 3 beispielhaft eine Bauform mit einer Hubeinheit 4 am freien Ende des Unterarmes 3, bei der eine Hubsäule 5, an deren unteren Ende eine Sauger-Einheit 20 mit nur einem Sauger 22 angeordnet ist.

Die Sauger-Einheit 20 und damit der Sauger 22 ist in der Richtung der Hubachse 5' - der größten Erstreckungsrichtung der Hubsäule 5, meist der Vertikalen 10 - relativ zu einer Führungshülse 6 gesteuert verfahrbar mittels eines an der Hubsäule 5 angreifenden, ebenfalls vertikal verlaufenden, in diesem Fall endlosen Zahnriemens 15.

Der Zahnriemen 15 verläuft abschnittweise, nämlich mit seinen beiden Trumen 15a, 15b ebenfalls in Richtung der Vertikalen 10 und läuft über je eine Umlenkwalze 12.1, 12.2 um, von denen sich eine am oberen und eine am unteren Ende der Hubsäule 5 befindet. An der unteren Umlenkwalze 12.1 ist der Sauger 22 drehfest befestigt und steht von dieser radial ab, je nach Drehlage der Umlenkwalze 12.1 in unterschiedliche radiale Richtungen 11.1 oder 11.2, meist nach unten, aber auch nach schräg unten oder zur Seite.

Der Zahnriemen 15 steht einerseits in Wirkverbindung mit einem gesteuert antreibbaren Antriebsritzel 13.1, welches gesteuert angetrieben von einem Motor 9.1 rotierbar um die aufrecht stehende Unterarm-Achse 3' im Unterarm 3 angeordnet ist und andererseits in Wirkverbindung mit einem gesteuert antreibbaren Antriebsritzel 13.2, welches von einem ansteuerbaren Motor 9.2 in fester Höhenposition im Unterarm 3 drehbar um eine etwa horizontale Achse an der Hub-Einheit 4 befestigt ist.

Die Hubsäule 5 erstreckt sich vertikal durch die Führungshülse 6 hindurch, die in fixer Höhenposition im Unterarm 3 befestigt ist, vorzugsweise zusätzlich gesteuert drehbar ist um die aufrecht stehende, insbesondere vertikal verlaufende, Hub-Achse 5'. Die Führungshülse 6 ist drehbar um die Hubachse 5' mittels eines Zahnriemens 14, der einerseits um den Außenumfang der Führungshülse 6 und andererseits um Ritzel umläuft, welches gesteuert drehbar um die Unterarm-Achse 3' ist.

Da die Hubsäule 5 relativ zur in der Höhe fest am Unterarm 3 angeordneten Führungshülse 6 gesteuert verfahrbar ist, andererseits in dieser drehfest um die Hub-Achse 5' gelagert ist, ist die Sauger-Einheit 20 und damit der Sauger 22 nicht nur entlang der aufrechten Achse, insbesondere der Vertikalen 10, gesteuert verfahrbar, sondern auch um diese gesteuert drehbar und um eine Querachse, die Rotationsachse der unteren Umlenkwalze 12.1, gesteuert verschwenkbar, je nachdem wie die beiden Antriebsritzel 13.1, 13.2 relativ zueinander angetrieben werden.

Die um die Unterarm-Achse 3' angeordneten Umlenkritzel bzw. Antriebsritzel, zum Beispiel 13.1, für die beiden Zahnriemen 14 und 15 werden angetrieben mithilfe von im Oberarm 2 umlaufenden endlosen Zahnriemen 7.1, 7.2, der nicht dargestellte Antriebs-Motor vorzugsweise auf der Oberarm-Achse 2' angeordnet sind.

Die Sauger-Einheit 20 mit dem Sauger 22 besitzt somit - unter Berücksichtigung der Bewegungsmöglichkeiten von Oberarm 2 und Unterarm 3 - in diesem Fall fünf Freiheitsgrade.

Bei anderen Bauformen der Hubeinheit 4 erfolgt der Antrieb des Greifkopfes 20 in der Vertikalen 10 auf andere Art und Weise und/oder der Sauger 22 besitzt weniger Freiheitsgrade.

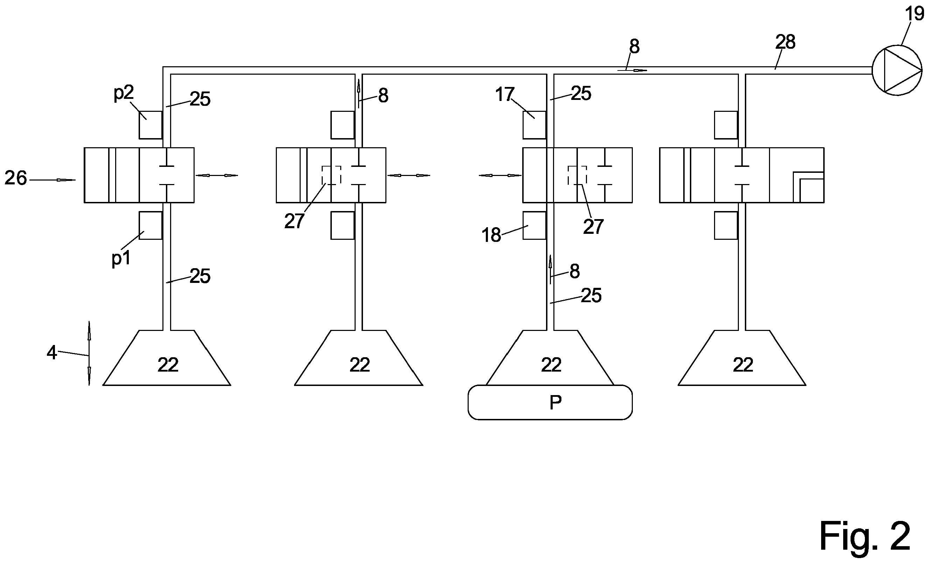

Wie die **Figuren 1a****,** **1b** sowie die Prinzip-Darstellung der **Figur 2** zeigen, verläuft von einer - meist ortsfest an der Roboterstraße 100 angeordneten - Unterdruck-Quelle 33 aus eine Unterdruck-Zentralleitung 28 zunächst zu jeder einzelnen Roboter-Basis 104 und von dort je eine Unterdruck-Leitung 25 entlang oder durch Oberarm 2 und Unterarm 3 bis zu jedem einzelnen Sauger 22, der dadurch mit Saugluft beaufschlagbar ist, die in Strömungsrichtung 8 vom jeweiligen Sauger 22 zur Unterdruck-Quelle 33 strömt.

Zwischen der Unterdruck-Zentralleitung 28 und jedem Sauger 22 ist ein ansteuerbares Sperrventil 26 für die jeweilige Unterdruck-Leitung 25 in dieser angeordnet, gemäß **Figur 1a** positioniert an der Roboter-Basis 104, um dieses Sperrventil 26 ortsfest positionieren zu können. Dadurch muss beim Aktivieren jedoch die relativ große Länge der Unterdruck-Leitung 25 zwischen dem Sperrventil 26 und dem Sauger 22 zunächst leer gesaugt werden, bevor der Sauger 22 seine Saugwirkung entfaltet, weshalb das Sperrventil 26 auch näher am Sauger 22 angeordnet sein kann, beispielsweise im Unterarm 3 oder gar in der Hub-Einheit 4.

Wie **Figur 2** für mehrere Sauger 22 zeigt - in der nur einer der Sauger 22 aktiviert ist, also momentan mit Saugluft beaufschlagt ist, da er ein Produkt P hält - ist weiterhin am Sperrventil 26 stromabwärts als auch stromaufwärts je einen Drucksensor 17, 18 angeordnet, aus deren Messwerten eine Druckdifferenz, also ein Druckabfall, über dem jeweiligen Sperrventil 26 ermittelt werden kann.

Ferner kann an einem, besser jedem, der Sperrventile 26 ein Ventilstellungs-Sensor 27 vorhanden sein, der zumindest die Offen-Stellung des Sperrventils 26 detektiert, und/oder auch die geschlossene Stellung.

Dabei ist es wichtig, dass in der Unterdruck-Leitung 25 zu jedem einzelnen der Sauger 22 ein solches Sperrventil 26 mit vorzugsweise der oben genannten Ausstattung vorhanden ist, unabhängig davon, ob die verschiedenen Sauger 22 nur jeweils einzeln an einem Roboter 1 vorhanden sind - wie in **Figur 1a****,** **1b** - oder wie in **Figur 1c** dargestellt an einem Roboter 1 - von dem in **Figur 1c** nur noch der Unterarm 3 dargestellt ist - als Saug-Einheit 20 ein Greifkopf 20 montiert ist, der mehrere Sauger 22 an einem Grundkörper 21 mit einem Unterdruck-Anschluss 24 umfasst, um mit jedem einzelnen Sauger 22 unabhängig voneinander - weshalb bei diesem Beispiel auch der Saugerabstand SA im Greifkopf 20 entlang einer Einstell-Linie 23 einstellbar ist - je ein Produkt P ergreifen zu können.

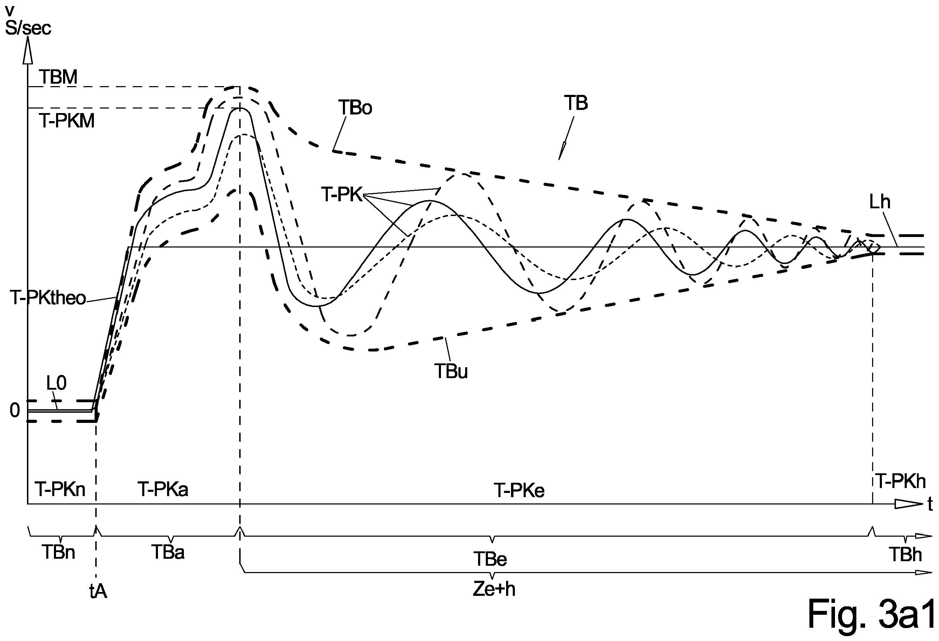

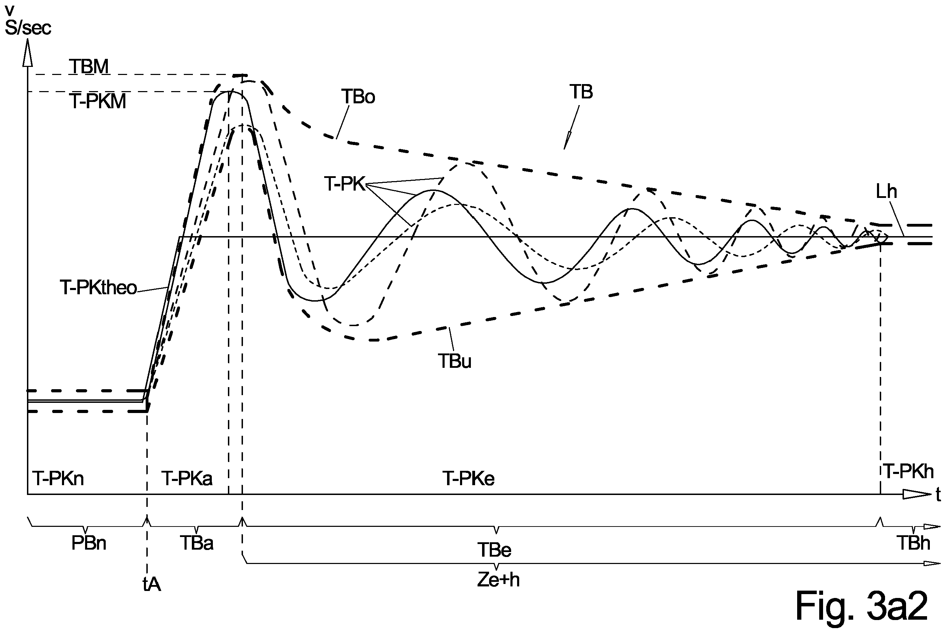

**Figur 3a1** sowie **Figur 3a2** zeigen für den Zeitbereich Ergreifen+Halten Ze+h jeweils einige Test-Parameterkurven T-PK, die beim Ergreifen konkreter erster Produkte einer zu handhabenden Charge ermittelt wurden.

Zumindest für den gleichen verwendeten Sauger, insbesondere auch die gesamte Saugereinheit und deren Saugluft-Versorgung, und bei zueinander sehr ähnlichen bis identischen Produkte derselben Charge weisen diese Kurven - selbstverständlich die Test-Parameterkurven T-PK ebenso wie die im Betrieb ermittelten Parameterkurven PK - eine typische, qualitativ gleiche, Gestalt auf, und lassen sich deshalb in entsprechende Zeit-Bereiche virtuell unterteilen, wie hier in **Figur 3a1** einerseits und in **Figur 3a2** andererseits eingezeichnet.

Die Kurven weisen entlang der Zeitschiene t (eingezeichnet für die durchgezogen gezeichnete T-PK) auf
- einen Nulllinien-Bereich T-PKn mit einer etwa horizontalen Nulllinie L0 auf Höhe des Parameter-Wertes null, da der Sauger noch nicht mit der Unterdruck-Quelle verbunden ist,
- einem vom Aktivierungs-Zeitpunkt tA, also dem Zeitpunkt der Verbindung der Saugers 22 mit der Saugluft-Quelle 19, sich anschließenden Anstiegs-Bereich T-PKa, in dem der Mengendurchsatz der Saugluft S/sec bzw. die Strömungsgeschwindigkeit v an Saugluft S von der Nulllinie L0 aus bis zu einem Maximum PKM,
- einem sich daran anschließenden Einschwing-Bereich T-PKe, in der der Mengendurchsatz bzw. die Strömungsgeschwindigkeit an Saugluft S eine Wellenlinie mit abnehmender Schwingungs-Amplitude darstellen, die sich asymptotisch einer Mittellinie, der Haltelinie Lh, annähert,
- einem sich daran anschließenden Halte-Bereich T-PKh, wobei die Kurve in diesem Bereich auch eine Wellenlinie sein kann, sofern deren Schwingungsamplitude geringer ist als 10 % des Abstandes zwischen der Nulllinie L0 und der Mittellinie der Haltelinie Lh.

Theoretisch dagegen müsste eine solche theoretische Parameter-Kurve T-PKtheo eine horizontale Nulllinie, einen sich daran anschließenden linearen Anstiegsbereich und von dessen oberen Ende eine horizontale Haltelinie aufweisen.

Die **Figuren 3a1****,** **3a2** zeigen wie aus diesen drei Test-Parameter-Kurven T-PK, vorzugsweise automatisch, ein Toleranzbereich-Band TB mit einem oberen Rand TBo und einem unteren Rand TBu, die qualitativ die gleiche Gestaltung wie die Test-Parameter-Kurven T-PK aufweisen, erzeugt wurde, wobei das Toleranzbereich-Band TB eine eng an den Test-Parameter-Kurven T-PK anliegende Hüllkurve ist. Dementsprechend lassen sich das Toleranzbereich-Band TB, insbesondere deren jeweiliger oberer Rand TBo und unterer Rand TBu in die gleichen analogen Zeitbereiche PBn, PBa, PBe und PBh unterteilen.

In der Praxis wird die Anzahl der dafür verwendeten Test-Parameter Kurven höher sein und etwa im Bereich von zehn oder darüber liegen.

Die **Figuren 3a1****,** **3a2** unterscheiden sich dadurch, dass bei **Figur 3a2** jede Kurve und auch der obere und untere Rand des Toleranzbereich-Bandes TB im Anstiegs-Bereich mit im wesentlichen gleichbleibender Steilheit bis zum Maximum ansteigen, in **Figur 3a1** dagegen dazwischen eine Sattelbildung vorliegt. Solche qualitativen Unterschiede beruhen auf Unterschieden entweder der Produkte der verschiedenen Chargen oder unterschiedlichen Gestaltungen der Sauger und deren Leitungssystem zur Unterdruck-Versorgung.

Solange während des Betriebs der Anlage beim Handhaben derselben Charge von Produkten auftretende verschiedene Parameter-Kurven PK - die die gleiche qualitative Gestalt aufweisen - innerhalb des Toleranz-Bereiches TB Platz finden, insbesondere wenn zuvor die Nulllinie der Parameter-Kurve in den Höhenbereich des Nulllinien-Bandbereiches gelegt wird und/oder die Aktivierungs-Zeitpunkte von Parameter-Kurve und Toleranz-Band sich decken, wird von einem korrekten Ergreifen und dauerhaften Halten eines Produktes P an dem jeweiligen Sauger 22 ausgegangen.

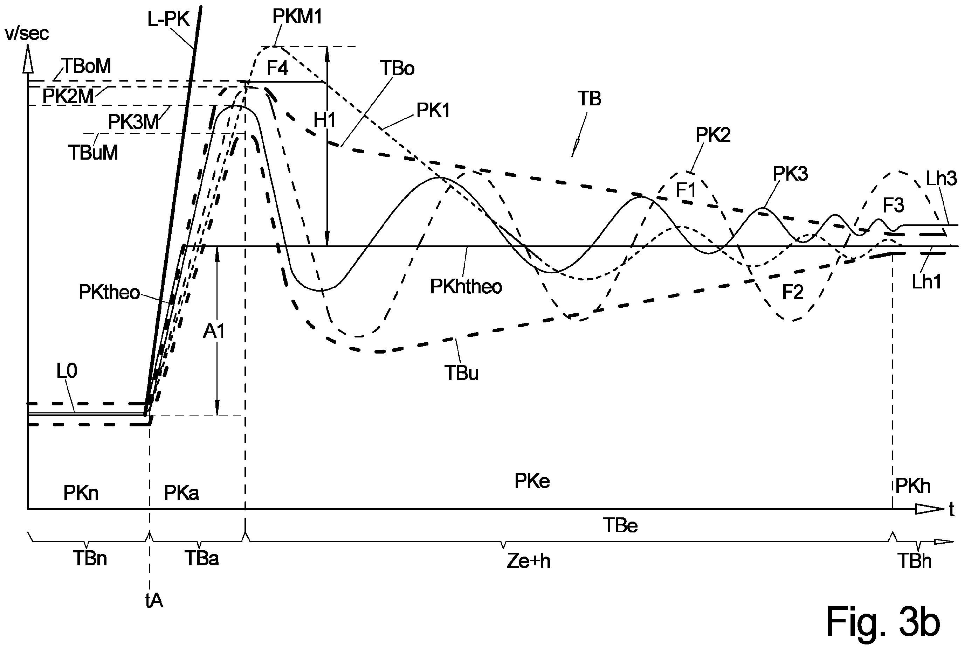

**Figur 3b** zeigt das Toleranzbereich-Band TB mit verschiedenen Parameter-Kurven PK1 bis PK3, bei denen dies nicht der Fall ist.

Bei der Parameter-Kurve PK1 deshalb, weil deren Anstiegs-Bereich PKa weit über das Toleranz-Band TB hinausgeht, über den Haltebereich TBh um etwa das Doppelte des Höhenabstandes zwischen dem Null-Bereich PBn und mehr als das Doppelte des Maximums TBM über der Höhe des Haltebereich TBh des Toleranz-Bandes TB.

Dies lässt vermuten, dass der Aktivierungs-Zeitpunkt tA zu lange vor dem Kontaktierungs-Zeitpunkt tK der Sauger am Produkt lag, sodass sich ein so hoher Volumenstrom einstellen konnte.

Bei der Parameter-Kurve PK2 deshalb, weil in deren Einschwingbereich PKe und auch danach die Amplitude der Schwingung wenig oder überhaupt nicht abnimmt.

Daraus kann geschlossen werden, dass sich das Produkt P immer wieder bereichsweise vom Sauger löst und neu angesaugt werden muss.

Bei der Parameter-Kurve PK3 deshalb, weil deren Haltelinie PKh - wenn man ihre Nulllinie L0 in den Null-Bereich TBn des Toleranz-Bandes TB legt - oberhalb des Haltebereiches TBh zu liegen kommt.

Dies lässt vermuten, dass der Sauger 22 nicht dicht am Produkt P anliegt, sondern Undichtigkeiten dazwischen verbleiben, entweder, weil das Produkt P zu rau ist, oder der Sauger 22 beschädigt ist oder das Produkt P beschädigt, insbesondere gebrochen, ist.

Mit anderen Worten kann aus einer Lage des eines Einschwing-Kurvenbereiches (PKe) außerhalb, insbesondere oberhalb, des Einschwing-Bandbereiches (TBe) auf eine zu raue Produktoberfläche oder ein beschädigtes, insbesondere gebrochenes, Produkt (P) oder einen beschädigten Sauger, insbesondere eine beschädigte Saugerlippe, geschlossen wird, insbesondere
- bei dem ersten Auftreten dieser Situation auf eine zu raue Produktoberfläche oder ein beschädigtes, insbesondere gebrochenes, Produkt (P) geschlossen wird und das Produkt (P) dem Ausschuss zugeführt wird und/oder
- bei einem aufeinderfolgenden, mehrfachen Auftreten dieser Situation auf einen beschädigten Sauger, insbesondere eine beschädigte Saugerlippe, geschlossen wird und der Sauger (22) gewechselt wird.

Alternativ muss man nicht jeden Vorgang des Eingreifens als mangelhaft einstufen, bei dem die Parameter Kurve PK auch nur geringfügig außerhalb des Toleranzbereich-Bandes TB liegt, sondern nur, wenn sie deutlich außerhalb liegt:
So kann man eine Parameterkurve - wie bei PK2 eingezeichnet - nur dann als mangelhaft einstufen, wenn die außerhalb des Toleranzbereich-Bandes TB liegenden Flächen F1, F2, F3 oberhalb des oberen Randes TBo und unterhalb des unteren Randes TBu zur entsprechenden Parameter-Kurve PK2 in Summe ein vorgegebenes Maß überschreiten.

Alternativ kann man eine Parameterkurve - wie bei PK1 eingezeichnet - nur dann als mangelhaft einstufen, wenn diese Flächen wie F4 einschließt, oberhalb des Maximums TBoM des oberen Randes TBo des Toleranzbereich-Bandes TB liegen und die Summe dieser Flächen insbesondere ein vorgegebenes Maß überschreitet.

In **Figur 3b** ist ferner eine sogenannte Leer-Parameter-Kurve L-PK eingezeichnet, die der Überprüfung des Rohrleitungssystems zwischen Sauger 22 und Messstelle dient.

Wenn zu einer Zeit, an dem kein Produkt P am Sauger 22 hängen soll, die Verbindung zur Unterdruck-Quelle 19 aktiviert wird, sollte die Strömungsmenge, also Strömungsmasse oder Strömungsvolumen an Saugluft S pro Zeiteinheit und/oder Strömungsgeschwindigkeit v der Saugluft S oder ein Alternativ-Parameter hierfür vom Aktivierung-Zeitpunkt tA aus schneller ansteigen als im Fall eines ab der Aktivierung bereits durch ein Produkt teilweise verschlossenen Saugers.

Eine solche Leer-Parameter-Kurve L-PK sollte - beginnend zum Aktivierung-Zeitpunkt tA im Höhenbereich des Nulllinien-Bereiches des Toleranzbereich-Bandes TB- aus dessen Anstiegs-Zeitbereich TBa nach seitlich oben hinauslaufen aufgrund eines steileren Anstieges als der obere Rand TBo in diesem Anstiegs-Bereich.

Wenn nicht, wird auf ein defektes, insbesondere undichtes oder verstopftes, Leitungssystem bis zur Messstelle geschlossen und eine Warnreaktion, insbesondere ein diesbezügliches Warnsignal, abgegeben.

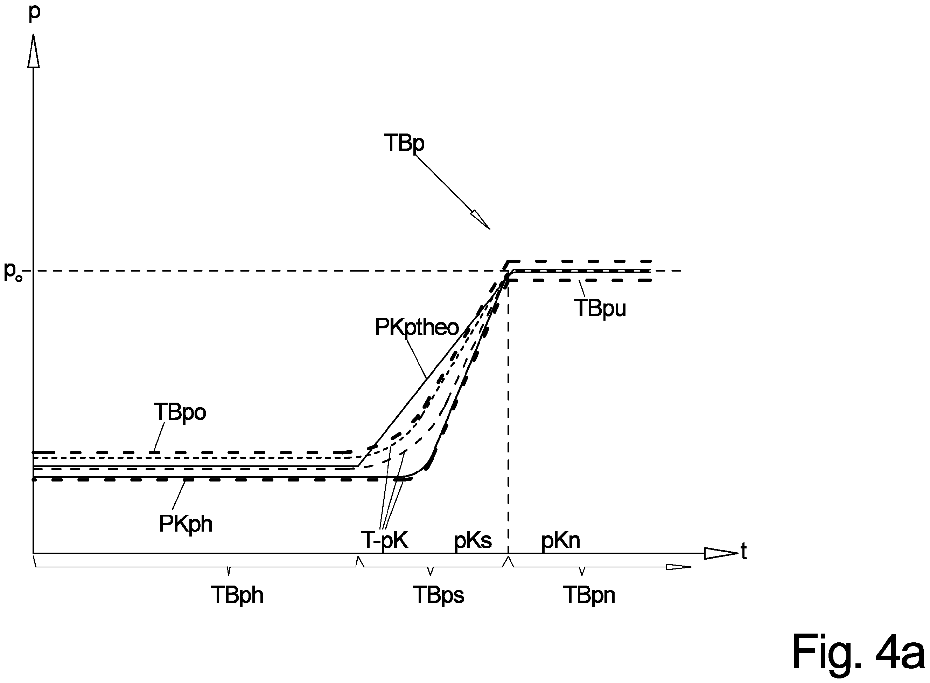

**Figur 4a** zeigt für den Zeitbereich Halten+Loslassen Zh+l einige Test-Druckkurven T-pK, die beim Loslassen konkreter erster Produkte einer zu handhabenden Charge ermittelt wurden, und eine typische Gestalt aufweisen, bei denen jedoch im Gegensatz zum Zeitbereich Ergreifen und Halten der absolute Druck p in der Saugluft-Leitung 25 zwischen Sauger 22 und Sperrventil 26 gemessen und über der Zeit t aufgetragen ist.

Dies ist notwendig, da nach dem Deaktivierung-Zeitpunkt tD keine Durchströmung dieser Leitung mehr stattfindet, aber im Zeitabschnitt dahinter dennoch eine Überprüfung der Funktion notwendig ist, was nur anhand des sich nach dem Deaktivierung-Zeitpunkt tD langsam an die Umgebung angleichenden Druck p möglich ist.

Die typische Gestalt der Test Druckkurven T-pK entlang der Zeitschiene in diesem Zeitbereich (eingezeichnet für die durchgezogen gezeichnete T-pK) umfasst
- einen Halte-Bereich pKh mit einer etwa horizontalen Haltelinie Lh, der zum Deaktivierungs-Zeitpunkt tD endet, wobei unter einer Haltelinie Lph auch eine Wellenlinie verstanden wird, sofern deren Schwingungsamplitude geringer ist als 10 % des Abstandes zwischen der Nulllinie Lp0 und der Mittellinie der schwingenden Haltelinie Lph ist,
- einem sich daran anschließenden Steig-Bereich pKs, in dem vom Deaktivierungs-Zeitpunkt tD, also dem Zeitpunkt des Lösens der Verbindung der Saugers 22 mit der Saugluft-Quelle 19, der Druck p in der Saugluft-Leitung stromaufwärts des Sperrventils 26 vom Unterdruck während des Haltens des Produktes P zunächst langsam und dann immer stärker werdend ansteigt bis auf Umgebungsdruck po,
- einem sich daran anschließenden Null-Bereich pKn, mit einer horizontalen Nulllinie Lp0 entsprechend dem Umgebungsdruck po.

Theoretisch müsste im Steigbereich PK ps der Druck p entsprechend der eingezeichneten theoretischen Druck Verlaufes PKptheo ab dem Deaktivierungs-Zeitpunkt tD mit gleicher Steigung kontinuierlich steigen bis auf Höhe des Umgebung-Druckes, was jedoch wegen der Praxis vorliegender Gegebenheiten so nicht stattfindet.

Aus diesen drei Test-Druckkurven T-pK wird ebenfalls, vorzugsweise automatisch, ein Toleranz-Band TBp mit einem oberen Rand TBpo und einem unteren Rand TBpu erzeugt, wobei der Toleranzbereich TBp eine an den Test-Druckkurven T-pK anliegende Hüllkurve ist.

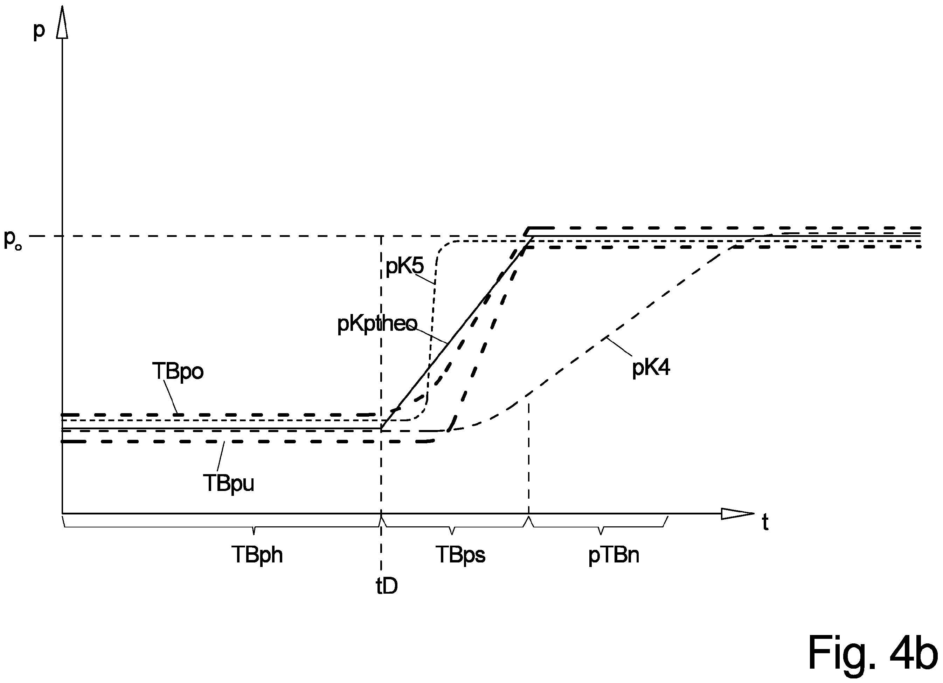

**Figur 4b** zeigt das Toleranz-Band TBp mit verschiedenen Druckkurven pK4 und pK5, die nicht vollständig im Toleranz-Band TBp des Druckes p untergebracht werden können.

Bei pK4 deshalb, weil diese ab dem Deaktivierungs-Zeitpunkt tD, also im Steig-Bereich pKs, sehr viel langsamer ansteigt als das Toleranz-Band TBp- sofern ihre Haltelinie Lph4 in den Haltebereich TBph des Toleranz-Bandes TBp gelegt wurde.

Dies lässt vermuten, dass nach Abschalten der Saugluft nur sehr langsam Luft aus der Umgebung in den Sauger bis zum Drucksensor nachströmen konnte, entweder, weil die Oberfläche des Produktes ungewöhnlich glatt war oder sich der Sauger am Produkt verklemmt hatte oder eine Verstopfung in der Saugluft - Leitung stromabwärts des Drucksensors vorhanden war.

Eine adäquate Warnreaktion hierauf wäre ein Warnsignal, um durch den Bediener zu überprüfen, ob das Produkt korrekt an der Ablagestelle abgelegt wurde oder aufgrund zu hohen Restdruckes nach dem Deaktivieren der Saugluft mit dem sich wegbewegenden Sauger 22 noch eine Strecke mitbewegt wurde vor dem Herabfallen vom Sauger.

Daraus könnte auch geschlossen werden, dass das Sperrventil 26, welches diesem Sauger 22 zugeordnet ist, undicht ist, und ein Warnsignal hinsichtlich dessen Überprüfung abgegeben wird, insbesondere wenn der Druck bei dieser Druck-Kurve pK4 dauerhaft nicht den Umgebungsdruck po erreicht, wie in **Figur 4b** dargestellt.

Bei pK5 deshalb, weil deren Steig-Linie Lps - sofern ihre Haltelinie Lph5a in den Haltebereich TBph des Toleranz-Bandes TBp gelegt wurde - wesentlich steiler Anstieg als das Toleranz-Band.

Daraus könnte geschlossen werden, dass der Sauger 22 auch während des Haltens des Produktes P nicht optimal an diesem anlag und bei Deaktivieren der Saugluft sofort sehr viel Umgebungsluft in den Sauger strömen konnte.

Eine adäquate Warnreaktion für diesen Fall könnte ein Warnsignal dahingehend sein, dass bei mehrmaligem Auftreten dieser Konstellation unmittelbar hintereinander der Sauger, insbesondere die Sauger Lippe, auf Beschädigungen geprüft werden sollte.

### BEZUGSZEICHENLISTE

- 1: Roboter
- 2: Oberarm
- 2': Oberarm-Achse
- 3: Unterarm
- 3': Unterarm-Achse
- 4: Hub-Einheit
- 5: Hubsäule
- 5': Hub-Achse
- 6: Führungshülse
- 7.1, 7.2: Zahnriemen
- 8: Strömungsrichtung
- 9.1, 9.2: Motor
- 10: Vertikale
- 11.1: 1. Querrichtung,
- 11.2: 2. Querrichtung
- 12.1, 12.2: Umlenkrolle, Ritzel
- 13.1, 13.2: Umlenkrolle, Ritzel
- 14: Zahnriemen
- 15: Zahnriemen
- 15 a, b: Trum
- 16.1, 16.2: Umlenkrolle, Ritzel
- 17: Drucksensor
- 18: Drucksensor
- 19: Unterdruck-Quelle
- 20: Sauger-Einheit, Greifkopf
- 20*: Steuerung
- 21: Grundkörper
- 22: Sauger, Greifer
- 23: Bewegungs-Linie, Gerade
- 24: Unterdruck-Anschluss
- 25: Unterdruck-Leitung

- 26: Sperrventil
- 27: Ventilstellungs-Sensor
- 28: Unterdruck-Zentralleitung

- 100: Umsetzvorrichtung, Roboterstraße
- 100*: Steuerung
- 101: Aufnahmefläche, Produktband
- 101': Produkt-Richtung
- 102: Behälter
- 103: Ablagefläche
- 104: Quertraverse, Roboterbasis
- 105: Scanner
- 106: Behälterband
- 106': Behälter-Richtung

- A: Abstand
- H: Höhe
- M: Masse
- L0: Null-Linie
- Lpo: Normaldruck-Linie
- Lh: Halte-Linie
- Lph: Halte-Linie des Druckes
- P: Produkt
- p: Druck
- pK: Druck-Kurve
- PK: Parameter-Kurve
- PKnull: horizontale Nulllinien-Bereich
- PKa: Anstiegs-Bereich
- PKh: horizontale Haltelinien-Bereich
- PKs: Steig-Bereich
- PKph: Haltelinien-Kurvenbereich
- PKpo: Normaldruck-Kurvenbereich
- TBs: Steig-Bereich
- TB: Toleranzbereich-Band, Toleranz-Band
- TBu, TBo: Rand unten/oben
- TBnull: horizontaler Nulllinien-Bereich
- TBa: Anstiegs-Bereich
- TBh: horizontaler Haltelinien-Bereich
- TBn: Normaldruck-Bereich
- TBs: Steig-Bereich
- TBp: Toleranzbereich-Band, Toleranz-Band (des Druckes)
- tA: Aktivierungs-Zeitpunkt
- tD: Deaktivierungs-Zeitpunkt
- tK: Kontakt-Zeitpunkt
- S: Saugluft
- SA: Sauger-Abstand
- V: Volumen
- v: Geschwindigkeit
- Ze+h: Zeitbereich Ergreifen+Halten
- Zh+l: Zeitbereich Halten+Loslassen

## Patentansprüche

1. **Verfahren** zum Überprüfen der Funktion einer Saugereinheit (20), deren Sauger (22) zum Halten eines Produktes (P), mittels Saugluft (S) mit Unterdruck beaufschlagbar ist, wobei
- zum Ergreifen und anschließenden Halten des Produktes (P) der Sauger (22) aktiviert wird durch Verbinden mit einer Unterdruck-Quelle (19),
- zum Loslassen des Produktes (P) dieser Sauger (22) deaktiviert wird durch Unterbrechen der Verbindung mit der Unterdruck-Quelle (19),
**dadurch gekennzeichnet, dass**
- in einem Zeitbereich Ergreifen + Halten (Ze+h) die vom Sauger (22) weg in Strömungsrichtung (8) zur Unterdruck-Quelle (19) strömende
- Strömungsmenge, also Strömungsmasse (M) oder Strömungsvolumen (V) an Saugluft (S) pro Zeiteinheit, und/oder Strömungsgeschwindigkeit (v) der Saugluft (S)
- oder ein diese Strömungsmasse oder Strömungsvolumen oder Strömungsgeschwindigkeit repräsentierender Alternativ-Parameter über der Zeit in einer Parameter-Kurve (PK) dargestellt wird und
- diese Parameter-Kurve qualitativ verglichen wird mit einem Toleranzbereich-Band (TB),
- bei einer für diesen Zeitbereich nicht innerhalb des Toleranzbereich-Bandes (TB) liegenden Parameter-Kurve (PK) eine Warnreaktion erzeugt wird.

2. Verfahren nach Anspruch 1,
**dadurch gekennzeichnet, dass**
bei einer außerhalb des Toleranzbereich-Bandes (TB) liegenden Parameter-Kurve (PK) davon ausgegangen wird, dass
a) entweder kein Produkt (P) am Sauger (22) gehalten wird
b) oder ein beschädigtes Produkt (P) am Sauger (22) gehalten wird
c) oder ein unbeschädigtes Produkt (P) an einem beschädigten Sauger (22) gehalten wird,
- und die Art der Warnreaktion basierend auf dieser Annahme gewählt wird,
- primär davon ausgegangen wird, dass a) oder b) vorliegt und dementsprechend das eventuell noch vorhandene, beschädigtes Produkt vom Sauger zu einer Ausschuss-Position gebracht und losgelassen wird,
- von c) erst ausgegangen wird, wenn - nur bei einem einzelnen Sauger - die Situation mindestens zweimal hintereinander vorliegt, und eine entsprechende Warnreaktion abgegeben wird.

3. Verfahren nach einem der vorhergehenden Ansprüche,
**dadurch gekennzeichnet, dass**
das Verbinden oder Unterbrechen der Verbindung mittels eines Sperrventils (26) erfolgt und die Ermittlung der Strömungsmenge oder Strömungsgeschwindigkeit (v) stromaufwärts, stromabwärts oder im Sperrventil (26) erfolgt.
(Toleranzbereich-Band ermitteln:)

4. Verfahren nach einem der vorhergehenden Ansprüche,
wobei das Produkt (P) eines aus einer zu handhabenden Charge von Produkten (P) ist,
**dadurch gekennzeichnet, dass**
zum Bestimmen des Toleranzbereich-Bandes (TB)
- mit ersten, unbeschädigten Produkten (P) der Charge jeweils eine Test-Parameter-Kurve (T-PK) testweise ermittelt wird
- aus der Summe dieser Test-Parameter-Kurven (T-PK) das Toleranzbereich-Band (TB) ermittelt wird,
- indem die beiden am weitesten auseinanderliegenden Test-Parameter-Kurven jeweils im Ganzen oder eine Hüllkurve um alle Test-Parameter-Kurven (T-PK) als einen unteren Rand (TBu) und einen oberen Rand (TBo) des Toleranzbereich-Bandes (TB) verwendet werden, wobei, vorzugsweise
- zur Ermittlung des Toleranzbereich-Bandes (TB) die Test-Parameter-Kurven (T-PK) mit ihren horizontalen Nulllinien (L0) übereinandergelegt werden und
- entweder die oberste und unterste Test-Parameter-Kurve (T-PK) als der obere Rand (TBo) oder als der untere Rand (TBu) des Toleranz-Bandes (TB) verwendet wird
- oder die äußeren Ränder des Bündels an Test-Parameter-Kurven (T-PK) als der obere Rand (TBo) oder als der untere Rand (TBu) des Toleranz-Bandes (TB) verwendet wird.

5. Verfahren nach einem der vorhergehenden Ansprüche,
**dadurch gekennzeichnet, dass**
- als Beginn des Zeitbereichs Ergreifen + Halten (Ze+ h) ein Aktivierungs-Zeitpunkt (tA), also der Beginn der Verbindung mit der Unterdruck-Quelle (19) festgelegt wird
und/oder
- als Dauer des Zeitbereichs Ergreifen + Halten (Ze+ h)
- entweder eine vorgegebene Zeitdauer festgelegt wird
- oder diejenige Dauer bis die Parameter-Kurve (PK) eine Schwingungshöhe aufweist, die geringer ist als 15 %, vorzugsweise geringer als 10 %, besonders bevorzugt geringer als 5 % der Höhe einer theoretischen Haltelinie (PKhtheo).
(Ausreißer:)

6. Verfahren nach einem der vorhergehenden Ansprüche, sowie nach Anspruch 4,
**dadurch gekennzeichnet, dass**
- bei Parameter-Kurven (PK) oder Test-Parameter-Kurven (T-PK), bei denen die Flanken deren Maxima und/oder Minima einen spitzen Innenwinkel von weniger als 15°, vorzugsweise von weniger als 10°, noch bevorzugter weniger als 7°, besonders bevorzugt weniger als 5° einschließen, die Maxima und/oder Minima dieser Spitzen ignoriert werden,
- bei solchen Test-Parameter-Kurven (T-PK) die gesamte Kurve nicht für die Ermittlung des Toleranz-Bandes (TB) verwendet wird.
(Kurven-Gestalt und deren Bereiche, Auswertung:)

7. Verfahren nach einem der vorhergehenden Ansprüche,
**dadurch gekennzeichnet, dass**
- im Zeitbereich Ergreifen + Halten (Ze+h) die Parameter-Kurve (PK) **virtuell** unterteilt wird in verschiedene, aneinander anschließende, Zeit-Bereiche,
- einen Nulllinien-Kurvenbereich (PKn) mit einer etwa horizontalen Nulllinie (L0) vor einem Aktivierungs-Zeitpunkt (tA), also dem Beginn der Verbindung mit der Unterdruck-Quelle (19)
- das Toleranzbereich-Band (TB) in analoge Zeit-Bereiche (TBn, TBa, TBe, TBh) unterteilt wird,
- für die Auswertung einer Parameter-Kurve (PK) deren Nulllinie (L0) in die Mitte der Höhe des Nulllinien-Bandbereiches (TBn) gelegt wird,
- die Zeit-Bereiche der Parameter-Kurve (PK) einzeln mit den Zeit-Bereichen des Toleranzbereich-Bandes (TB) verglichen werden, wobei, vorzugsweise
im Zeitbereich Ergreifen + Halten (Ze+h) weitere Zeit-Bereiche vorhanden sind, nämlich
- ein Anstiegs-Kurvenbereich (PKa) ab dem Aktivierungs-Zeitpunkt (tA) während des Ergreifens bis zu einem ersten Maximum (PKM),
- ein Einschwing-Kurvenbereich (PKe) nach dem Maximum (PKM) des Anstiegs-Kurvenbereichs ab Beginn des Haltens,
- gegebenenfalls ein Haltelinien-Kurvenbereich (PKh) mit einer etwa horizontalen Haltelinie (Lh) anschließend an den Einschwing-Kurvenbereich (PKe),
- das Toleranzbereich-Band (TB) ab dem Aktivierungs-Zeitpunkt (tA) in analoge Zeit-Bereiche (TBa, TBe, TBh) unterteilt wird, und/oder
- aus der Höhe (H) des ersten Maximums (PKM) über der Haltelinie (Lh) auf den zeitlichen Versatz zwischen dem Aktivierungs-Zeitpunkt (tA) der Unterdruckquelle (19) und einem Kontakt-Zeitpunkt (tK) zwischen Sauger (22) und Produkt (P) geschlossen wird,
- bei einer Höhe (H) von mehr als 100 % des Abstandes (A) zwischen Nulllinie (L0) und Haltelinie (Lh), vorzugsweise von mehr als 130 %, der zeitliche Versatz zwischen dem Kontakt-Zeitpunkt (tK) und dem Aktivierungs-Zeitpunkt (tA) reduziert wird, bis die Höhe (H) des ersten Maximums (PKM) auf 130 %, vorzugsweise 100 % des Abstandes (A) gesunken ist.

8. Verfahren nach Anspruch 7,
**dadurch gekennzeichnet, dass**
- aus einer Lage eines Einschwing-Kurvenbereiches (PKe) außerhalb des Einschwing-Bandbereiches (TBe) auf eine zu raue Produktoberfläche oder ein beschädigtes Produkt (P) oder einen beschädigten Sauger geschlossen wird,
- bei dem ersten Auftreten dieser Situation auf eine zu raue Produktoberfläche oder ein beschädigtes Produkt (P) geschlossen wird und das Produkt (P) dem Ausschuss zugeführt wird und/oder
- bei einem aufeinderfolgenden, mehrfachen Auftreten dieser Situation auf einen beschädigten Sauger geschlossen wird und der Sauger (22) gewechselt wird.
(Flächensumme PK außerhalb TB oder über PKM:)

9. Verfahren nach Anspruch 7 oder 8,
**dadurch gekennzeichnet, dass**
eine Lage des Einschwing-Kurvenbereiches (PKe) einer Parameter-Kurve (PK) außerhalb des Einschwing-Bandbereiches (TBe) nur berücksichtigt wird, wenn
- entweder wenigstens eine Fläche zwischen dem außerhalb des Einschwing-Bandbereiches (TBe) liegenden Teils der Parameter-Kurve (PK) und dem benachbarten Rand des Einschwing-Bandbereiches (TBe) grösser als 20 %, vorzugsweise grösser als 10 % der Fläche des Einschwing-Bandbereiches (TBe) über diesen Zeitabschnitt ist
- oder wenigstens eine Fläche unterhalb der Parameter-Kurve (PK) aber oberhalb des Maximums (PKM) des oberen Randes (TBo) grösser als 5 %, vorzugsweise grösser als 3 % der Fläche des Einschwing-Bandbereiches (TBe) über diesen Zeitabschnitt ist.
(Rohrsystem auf Zusetzen testen:)

10. Verfahren nach einem der Ansprüche 7 bis 9,
**dadurch gekennzeichnet, dass**
zu einer Zeit, an dem kein Produkt (P) am Sauger (22) hängen soll,
- die Verbindung zur Unterdruck-Quelle (19) aktiviert wird,
- die Strömungsmenge, also Strömungsmasse (M) oder Strömungsvolumen (V) an Saugluft (S) pro Zeiteinheit und/oder Strömungsgeschwindigkeit (v) der Saugluft (S)
- oder ein diese Strömungsmasse (M) oder Strömungsvolumen (V) oder Strömungsgeschwindigkeit (v) repräsentierender Alternativ-Parameter über der Zeit in einer Parameter-Kurve (PK) dargestellt wird und
- diese Leer-Parameter-Kurve (L-PK) qualitativ verglichen wird mit dem Anstiegs-Zeitbereich (TBa) des Toleranzbereich-Bandes (TB),
- bei einer für diesen Zeitbereich nicht oberhalb des Anstiegs-Bandbereiches (TBa) liegenden Leer-Parameter-Kurve (L-PK) auf ein defektes Leitungssystem bis zur Messstelle geschlossen wird und eine Warnreaktion erzeugt wird.
(Zeitbereich Halten + Loslassen:)

11. Verfahren nach einem der vorhergehenden Ansprüche, sowie nach Anspruch 3,
**dadurch gekennzeichnet, dass**
- im Zeitbereich Halten + Loslassen (Zh+l) der Druck (p) stromaufwärts des Sperrventils (26) gemessen wird und über der Zeit (t) in einer Druck-Kurve (pK) dargestellt wird,
- diese Druck-Kurve (pK) qualitativ verglichen wird mit einem Toleranzbereich-Band (TBp) des Druckes (p),
- bei einer für diesen Zeitbereich nicht innerhalb des Toleranzbereich-Bandes (TBp) des Druckes (p) liegenden Druck-Kurve (pK) eine Wahnreaktion erzeugt wird,
wobei, vorzugsweise
- als Beginn des Zeitbereichs Halten + Loslassen (Zh+l) der Deaktivierungs-Zeitpunkt (tD), also der Entkopplung von der Unterdruck-Quelle (19), festgelegt wird
und/oder
- als Dauer des Zeitbereichs Halten + Loslassen (Zh+l)
- entweder eine vorgegebene Zeitdauer festgelegt wird
- oder diejenige Dauer, bis die Druck-Kurve (pK) bis auf eine Differenz von weniger als 10 %, vorzugsweise von weniger als 7 %, besonders bevorzugt von weniger als 5 % den Umgebungsdruck (po) erreicht hat.

12. Verfahren nach Anspruch 11,
**dadurch gekennzeichnet, dass**
die Druck-Kurve (pK) **virtuell** unterteilt wird in
- einen Haltelinien-Kurvenbereich (PKph) mit einer etwa horizontalen Haltelinie (Lph),
- einen Steig-Kurvenbereich (pKs) ab dem Deaktivierungs-Zeitpunkt (tD),
- einen Umgebungsdruck-Kurvenbereich (PKpo) mit einer etwa horizontalen Nulllinie (Lpo),
und das Toleranz-Band (TBp) in analoge Band-Bereiche (TBph, TBps, TBpo).
(Druckmessung und zusätzlich Ventilstellung überprüfen:)

13. Verfahren nach einem der vorhergehenden Ansprüche, sowie nach Anspruch 3,
**dadurch gekennzeichnet, dass**
- als die Strömungsmenge oder Strömungsgeschwindigkeit repräsentierender Alternativ-Parameter eine Druck-Differenz über einer Drosselstelle im Strömungspfad der Saugluft stromabwärts des Saugers (22) ermittelt wird,
- das Sperrventil (26) als Drosselstelle benutzt wird,
wobei, vorzugsweise
- die Druck-Differenz ermittelt wird durch Messen des absoluten Druck-Wertes stromaufwärts und stromabwärts der Drosselstelle und Differenzbildung aus den beiden Werten
- durch Messen unmittelbar stromaufwärts und stromabwärts das Sperrventils (26),
und/oder
- die Position des Sperrventils (26) überprüft wird,
- hinsichtlich dessen geöffneter Endlage,
- zusätzlich hinsichtlich dessen geschlossener Endlage,
- bei kontinuierlicher Überprüfung der sich hieraus ergebende Aktivierungs-Zeitpunkt (tA) und Deaktivierungs-Zeitpunkt (tD) als redundante Information zu diesen Zeitpunkten aus der Parameter-Kurve (PK) verwendet werden.

14. Verfahren nach einem der vorhergehenden Ansprüche,
**dadurch gekennzeichnet, dass**
- ein Kontakt-Zeitpunkt (tK), zu dem der Sauger (22) in Kontakt mit dem Produkt (P) gerät, von einer Steuerung aus der Sauger-Position ermittelt wird.

15. **Sauger-Einheit** (20) mit
- einem Grundkörper (21),
- wenigstens einem Sauger (22) zum Halten eines Produktes (P) mittels Saugluft (S) mit Unterdruck am Sauger (22),
- einem Unterdruck-Anschluss (24) am Grundkörper (21) zum Verbinden des Saugers (22) mittels einer Unterdruck-Leitung (25) mit einer Unterdruck-Quelle (19),
- je einem, jedem Sauger (22) zugeordneten, stromabwärtigen, ansteuerbaren Sperrventil (26) in der Unterdruck-Leitung (25),
- wenigstens einem Drucksensor (17),
- einer Steuerung (1*), die mit dem Drucksensor (17) datentechnisch verbunden ist und mit dem Sperrventil (26) wirkverbunden ist,
**dadurch gekennzeichnet, dass**
- entweder ein Durchflussmengen-Sensor oder ein Durchflussgeschwindigkeit-Sensor bezüglich der Saugluft (S) in der Unterdruck-Leitung (25) vorhanden ist,
- oder ein zusätzlicher Drucksensor (18) so angeordnet ist, dass je ein Drucksensor (17, 18) stromaufwärts und andererseits stromabwärts des Sperrventils (26) angeordnet ist,
- die Steuerung (1*) ausgebildet ist zur Durchführung des Verfahrens nach einem der vorhergehenden Ansprüche.
